Europäisches Patentamt

European Patent Office

Office européen des brevets

(19)

(11) Publication number: **0 060 020**

**A1**

(12) # EUROPEAN PATENT APPLICATION

(21) Application number: **82300539.2**

(22) Date of filing: **03.02.82**

(51) Int. Cl.³: **H 02 M 3/155**
**H 02 P 13/32**

(30) Priority: **27.02.81 GB 8106339**
**16.07.81 GB 8121968**

(43) Date of publication of application:
**15.09.82 Bulletin 82/37**

(84) Designated Contracting States:
**BE CH DE FR IT LI NL SE**

(71) Applicant: **THE MARCONI COMPANY LIMITED**
**Marconi House New Street**
**Chelmsford Essex CM1 1PL(GB)**

(72) Inventor: **Reardon, Denis David Silvey**
**Highfields The Drive Highfield Street**
**Anstey Leicester Le7 7DU(GB)**

(74) Representative: **Hoste, Colin Francis et al,**
**Marconi House New Street**
**Chelmsford Essex CM1 1PL(GB)**

(54) Improvements in or relating to d.c. converters.

(57) A d.c. converter which produces a d.c. output voltage from a lower d.c. input voltage is arranged so as to minimise the ripple voltage present on the output and the ripple current which is present at the input. Instead of using a single switch to chop the input voltage in the conventional manner, two serially connected switches are used with one switch being 180° out of phase with the other. A capacitor is connected across each switch and because of the 180° phase shift, the two voltages across each capacitor do not add arithmetically. By correctly choosing the output voltage in relation to the input voltage, the ripple values can be reduced to negligible levels without the need to increase the value of the associated reactive components. A converter circuit which is capable of handling power flowing in either direction is described.

FIG.3.

Improvements in or relating to d.c. converters

This invention relates to d.c. converters for producing a d.c. output voltage from a lower d.c. input voltage. Converters of this kind are sometimes called "choppers" as the input voltage is usually rapidly chopped by means of a controllable switch. The output of the switch is smoothed and the on-off ratio of the switch determines the level of the d.c. output voltage. The switching nature of operation of such converters results in both a ripple on the output voltage and a ripple in the input current. In practice, these ripple values must be limited to acceptable levels and it is these levels together with the permissible switching frequency which primarily determines the values, physical sizes and other characteristics of filter inductors and capacitors associated with the converter. The present invention seeks to provide a converter in which the effective values of these filter components can be minimised.

According to this invention, a d.c. converter for producing a d.c. output voltage from a lower d.c. input voltage includes two serially connected switches arranged to receive the input voltage via an inductor; two capacitors each connected, via a diode, in shunt with a respective one of said switches to absorb some or all of the energy stored in the said inductor, when the said switch changes from a conductive to a non-conductive state; and means for operating said switches at the same frequency as each other, and wherein the switching cycle of one switch is displaced by half a switching cycle period relative to that of the other switch.

The invention is further described by way of example with reference to the accompanying drawings, in which

Figure 1 shows a known converter,

Figure 2 shows its associated waveforms,

Figure 3 shows a converter in accordance with this invention

Figure 4 shows its associated waveforms, and

Figure 5 shows a modified converter.

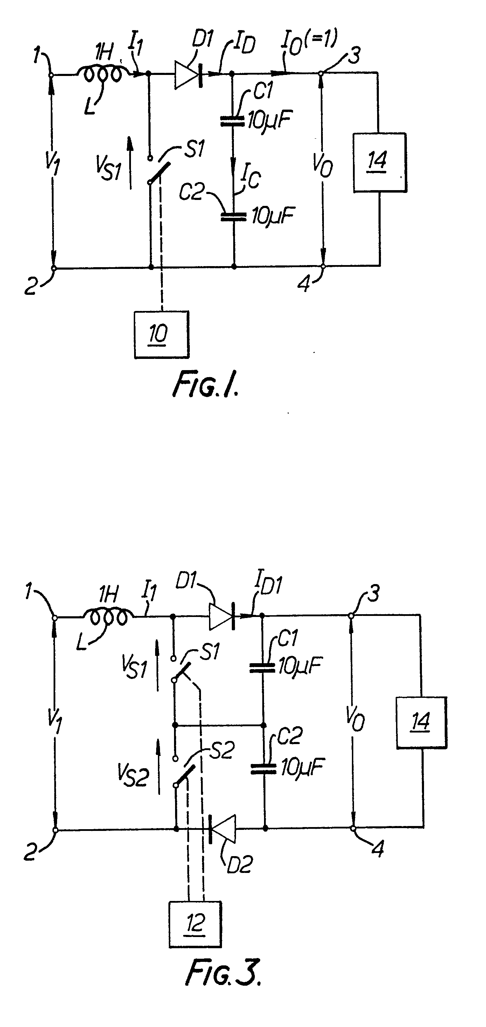

Referring to Figure 1, a much simplified conventional d.c. converter is shown which is suitable for producing a d.c. output voltage from a lower d.c. input voltage which is applied to it. Although the output voltage is nominally a d.c. one, it nevertheless inevitably contains a ripple whose frequency is related to the switching frequency of the converter and whose amplitude is related to the magnitude of the reactive components of the converter. In the present example, it is assumed that the input voltage is 600V and that the purpose of the converter is to produce an output voltage of 1000V.

Referring to Figure 1 in more detail, the known converter receives an input d.c. voltage at terminals 1 and 2 and is operative to provide the higher d.c. output voltage at terminals 3 and 4. Such a converter is sometimes termed a step-up chopper. An inductor L and a switch S1 are connected in series across the two input terminals 1 and 2. Two capacitors C1 and C2 are connected in series across the two output terminals 3 and 4, and a diode D1 is connected between the inductor L and the output terminal 3 and is poled as shown. In operation, a load 14 is connected across the output terminals 3 and 4. In practice, switch S1 is typically a high frequency transistor and its conductivity is controlled by a timing circuit 10. The timing circuit 10 generates a fixed frequency rectangular output waveform and it is the mark-to-space ratio of this waveform which determines the duty cycle of the switch S1 and hence the magnitude of the output voltage $V_0$ relative to the input voltage $V_1$ of the converter. In Figure 1, the inductor L has a value of one Henry, and each capacitor C1 and C2 has a value of 10µF.

When the switch S1 is rendered conductive, current flows through the inductor L from input terminals 1 and 2, and through switch S1 with the current value rising at a rate primarily determined by the inductance of the inductor L. When the switch S1 is rendered non-conductive under the action of the signal generator 10, the energy stored within the inductor L initially flows to the capacitors C1 and C2 via the diode D1 which becomes forward biassed at that time.

The waveforms which are indicative of the operation of

3

0060020

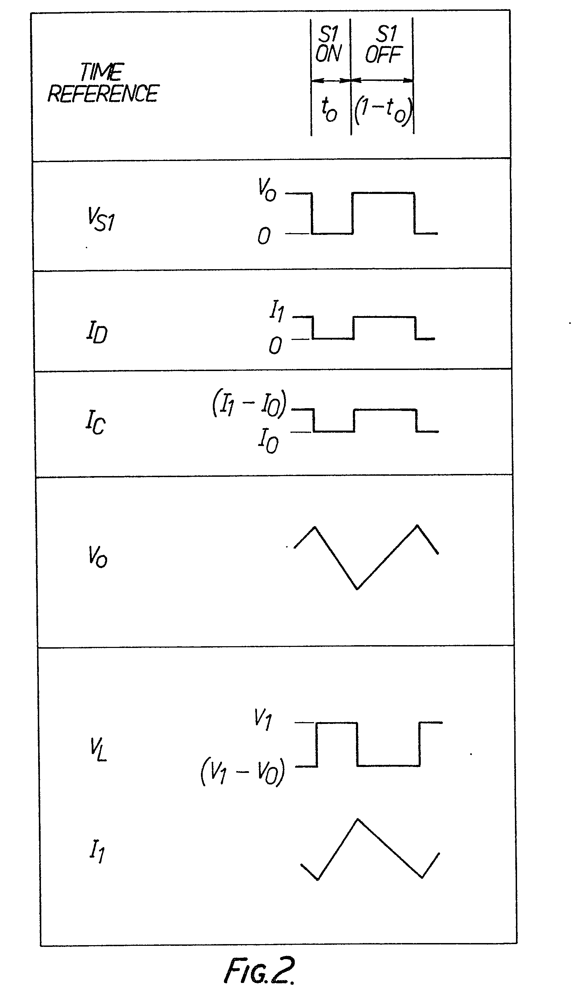

the circuit shown in Figure 1 are illustrated diagrammatically in Figure 2. These Figures are used subsequently to explain the various circuit parameters associated with the operation of the converter.

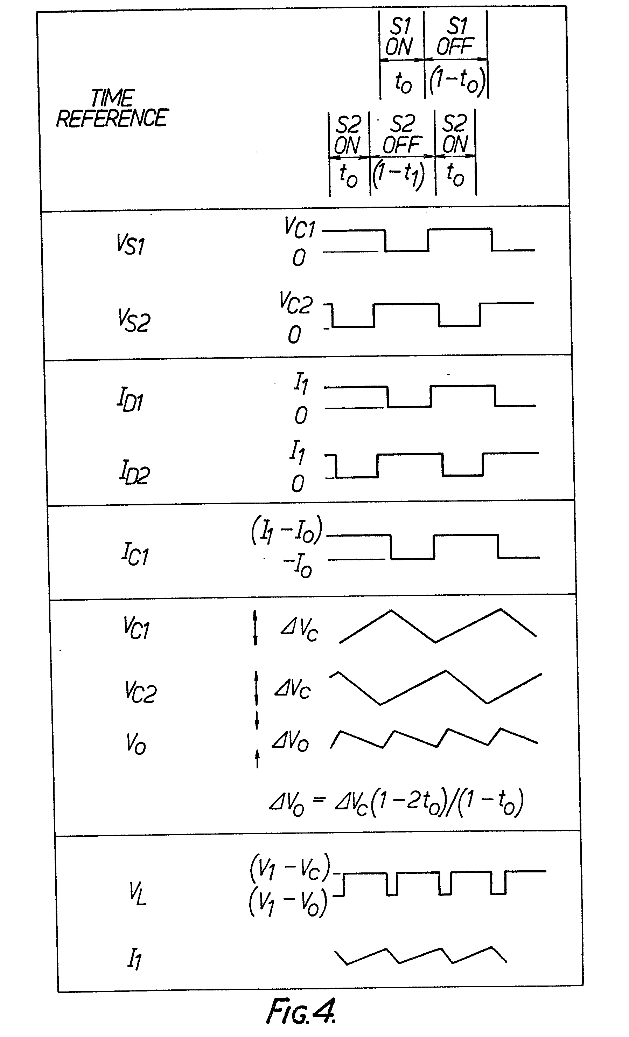

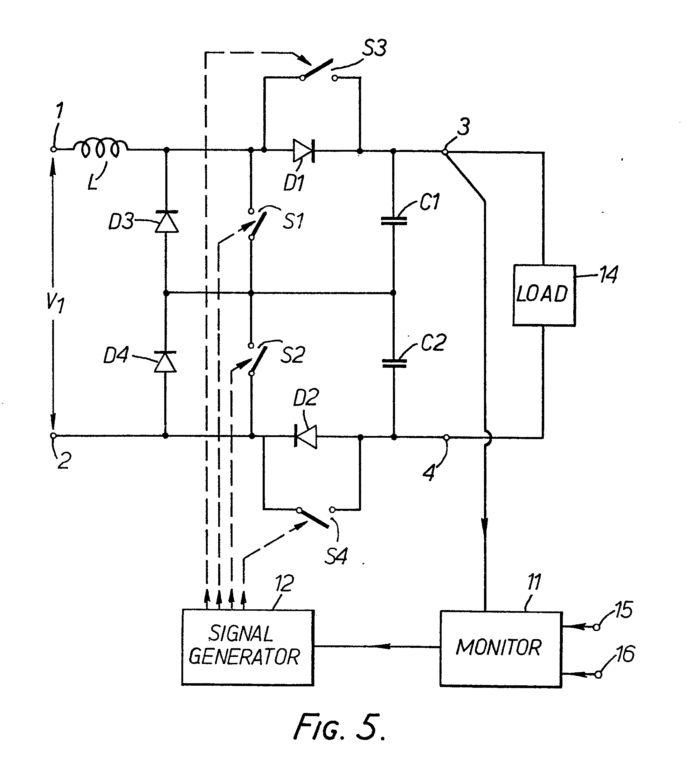

Referring to Figure 3, the present invention uses two switches S1 and S2 in place of the original single switch S1, and they are controlledby a signal generator 12 in such a way that, for an inductor L and capacitors C1 and C2 of the same value as those used in Figure 1, very much lower ripple values can be obtained. As will be seen from Figure 3, the converter is very similar to that shown in Figure 1 as apart from the provision of the two switches S1 and S2, an additional diode D2 is provided. The timing circuit necessary to control the operation of the switches S1 and S2 is only slightly more complex than the pulse generator 10 shown in Figure 1, and the nature of the required timing waveforms is shown in Figure 4.

It will be seen that both switches S1 and S2 operate at the same frequency as each other, but that the switching waveform of switch S2 is phased shifted relative to that of switch S1 by an amount corresponding to half the period of the switching waveform. The other waveforms in Figure 3 illustrate the currents and voltages relating to the various circuit components so that the practical effect of using two switches instead of only a single can be fully appreciated.

In order to appreciate the advantages of the present invention, the following calculations are given by way of example with reference to Figures 1 and 2. The calculations assume loss free components, a constant current load and ignore second-order effects. The input current $I_1$ is given by

$$I_1 = I_0 V_0 / V_1$$

where $I_0$ is the output current (normalised to unity), $V_1$ is the input voltage, and $V_0$ is themean output voltage. In this example, $V_1 = 600$ volts, and $V_0 = 1000$ volts, giving $I_1 = 1.67$ amps.

Assuming a repetition frequency of 1 kHz, switch S1 is conductive for a period $t_0$ milliseconds and non-conductive for a period of $(1-t_0)$ milliseconds. With reference to Figures 1 and 3, the diode current $I_D$ is given by

$$I_D = I_1(1-t_0)/1 = I_0$$
$$\text{and } t_0 = 1-(I_0/I_1)$$

Thus $t_0 = 0.4$ mS.

From these figures, output ripple voltage $\Delta V$ is given by

$$\Delta V = I.t/C,$$

i.e. $\Delta V_0 = \dfrac{I_0 \, t_0}{C}.$

As capacitors C1 and C2 are each 10µF, and appear in series as 5µF,

this gives $\Delta V_0 = \dfrac{1(\text{amps}) \times 0.4(\text{mS})}{5\mu F} = 80$ volts

The input ripple current is given by

$$\Delta I = V.t/L$$

i.e. $\Delta I_1 = \dfrac{V_1 \, t_0}{L}$

i.e. $\Delta I_1 = \dfrac{600(\text{volts}) \times 0.4(\text{mS})}{I(H)} = 240$ mA.

Referring to Figures 3 and 4, similar calculations are as follows. Note that $I_1$ is 1.67 amps, as before, and that $t_0 = 0.4$ mS is also unchanged.

The output voltage ripple $\Delta V$ is given by

$$\Delta V = I.t/C,$$

i.e. $\Delta V_C = \dfrac{I_0 \, t_0}{C}$

i.e. $\Delta V_C = \dfrac{1(\text{amp}) \times 0.4(\text{mS})}{10\mu F} = 40$ volts

From Figure 4, $\Delta V_0 = \Delta V_C(1-2t_0)/(1-t_0)$,

i.e. $\Delta V_0 = 40(0.2/0.6)$

i.e. $\Delta V_0 = 13.3$ volts

The input ripple current $\Delta I$ is given by $\Delta I = Vt/L$,

i.e. $\Delta I_1 = \dfrac{(V_1 - V_C)t_0}{L}$ (where $V_C$ is the capacitor voltage)

i.e. $\Delta I_1 = \dfrac{(V_1 - V_0/2)t_0}{L}$

i.e. $\Delta I_1 = \dfrac{(600 - 500)(\text{volts}) \times 0.4(\text{mS})}{1(H)}$

$$= 40 \text{ mA}$$

It will therefore be seen that in Figure 3, the input ripple current is reduced to only 40 mA from the figure of 240 mA produced by Figure 1, and that the output ripple voltage is reduced from the previous value of 80 volts to 13.3 volts, without increasing the value of the inductor L or the capacitors C1 and C2.

As in Figure 1, the output voltage produced in Figure 3 is determined by the on-off ratio  of each switch S1 and S2, i.e. the proportion of a switching period for which a switch is conductive. In practice the actual level of the output voltage is monitored (by means not shown) and the mark-space ratio of the waveforms generated by the generator 12 is adjusted accordingly to maintain the required output voltage.

If the output voltage is twice the input voltage, then according to the previously stated equations, the ripples disappear completely.  However, the equations assume loss-free components, a constant-current load, and ignore second order effects, and in practice as the condition $V_0 = 2V_1$ is approached, these effects dominate so that the ripples are not completely removed.

The circuit shown in Figure 3 can also be used for feeding a load requiring three voltage terminals. E.g. with reference to the example previously given 0 volts from the junction point of capacitors C1 and C2, +500 volts from terminal 3 and -500 volts from terminal 4.  Individual control of positive and negative voltages is then possible by controls of the mark/space ratios of switches S1 and S2, whilst still minimising the input current ripple.

The circuit shown in Figure 3 operates to transfer power from the input terminals 1, 2 to the output terminals 3,4 for utilisation by the load 14.  The invention can also be used to transfer energy from the load back to the input terminals, and such a capability can be very useful with certain kinds of load which regenerate energy under particular operating conditions.  For example, if the load is a rotating electrical machine, such as a motor, it will regenerate power whilst it is de-accelerating or braking, and under these conditions it is desirable to return to the power source energy which would otherwise be wasted.

A modified circuit which enables this function to be achieved is shown in Figure 5, and it will be seen that in essence it is very similar to Figure 3. It includes two additional switches S3, S4 which are in shunt with respective ones of the diodes D1, D2 and also two additional diodes D3, D4 which are in shunt with respective ones of the switches S1, S2. During normal operation, i.e. when power is transferred from a power source at terminals 1, 2 to the load 14, the switches S3, S4 are both held non-conductive all of the time, and under these conditions the diodes D3 and D4 are non-conductive. Thus the circuit behaves in exactly the same way as Figure 3.

A monitor circuit 11 is connected to output terminal 3 to monitor the voltage level at that point, as this enables it to be determined whether the load 14 is consuming or regenerating power. Under conditions of normal operation in which the load 14 is consuming power, the voltage level at terminal 3 will drop slightly below its nominal design value. The nominal value is applied as a threshold value via terminal 15 and the voltage drop on terminal 3 is detected by the monitor 11 and is used by the generator circuit 12 to control the mark-to-space ratio of the switches S1, S2 to compensate. When the load 14 regenerates power, the potential at point 3 will rise - this condition is detected by the monitor 11 when potential exceeds a threshold level at terminal 16 and this causes the generator 12 to hold switches S1 and S2 continuously non-conductive, and to apply a switching waveform to the previously non-conductive switches S3, S4 so that they act as a converter in reverse. Thus the mark-to-space ratio of switches S3, S4 is chosen to match the excess potential level on terminal 3 to the nominal supply potential $V_1$. As with switches S1, S2, the switches S3, S4 are controlled by switching waveforms in which the switching cycle of one switch is displaced by half a switching cycle period relative to that of the other switch to obtain the benefits of the present invention.

In principle the diodes D3, D4 are not needed, as switches S1, S2 could be closed at the appropriate times to conduct the current instead, but in practice this is not desirable because very accurate timing control would be needed to operate the switches S1, S2, and because if the switches S1, S2 were implemented as transistors they would not be able to conduct current in the reverse direction.

The use of two switches S1, S2 in antiphase enables the ripple level to be minimised. If this consideration is not of importance when power is being fed back from the load to the supply (and in practice it is likely to be of less significance) then switches S3 and S4 can be operated together in-phase and this will lead to a slight simplification of the control circuit. In Figure 3 it is possible to independently adjust the output potentials across the two capacitors C1 and C2. In principle, the regenerative action of two separate loads connected respectively across capacitors C1 and C2 can be used to independently channel regenerated energy back to the supply terminals 1 and 2.

CLAIMS:-

1. A d.c. converter for producing a d.c. output voltage from a lower d.c. input voltage including two serially connected switches arranged to receive the input voltage via an inductor; two capacitors each connected, via a diode, in shunt with a respective one of said switches to absorb some or all of the energy stored in the said inductor, when the said switch changes from a conductive to a non-conductive state; and means for operating said switches at the same frequency as each other, and wherein the switching cycle of one switch is displaced by half a switching cycle period relative to that of the other switch.

2. A converter as claimed in claim 1 and wherein a diode is connected in series with each of the two capacitors, so that each capacitor and its associated diode are together in shunt with a respective switch.

3. A converter as claimed in claim 2 and wherein each of said diodes is connected in a current path between respective input terminals and respective output terminals.

4. A converter as claimed in claim 3 and wherein the on-off ratio of the two switches is the same as each other, and are controlled together to adjust the value of the output voltage.

5. A converter as claimed in claim 3 or 4 and wherein means are provided for causing power which is applied to the output terminals from a regenerative load to be transferred to said input terminals, said means comprising two further switches connected respectively in shunt with each of said diodes, and the conductive properties of which are dependent on the voltage present at said output terminals.

6. A converter as claimed in claim 5 and wherein a respective diode is connected in shunt with each of said serially connected switches.

FIG.1.

FIG.3.

| TIME REFERENCE | $\begin{array}{c}S1 \\ ON\end{array}$ $t_0$ | $\begin{array}{c}S1 \\ OFF\end{array}$ $(1-t_0)$ |
|---|---|---|

$V_{S1}$       $V_0$ —   $0$ —

$I_D$       $I_1$ —   $0$ —

$I_C$       $(I_1 - I_0)$ —   $I_0$ —

$V_0$

$V_L$       $V_1$ —   $(V_1 - V_0)$ —

$I_1$

FIG.2.

| TIME REFERENCE | | | |
|---|---|---|---|
| | | S1 ON | S1 OFF |
| | | $t_O$ | $(1-t_O)$ |
| | S2 ON | S2 OFF | S2 ON |
| | $t_O$ | $(1-t_1)$ | $t_O$ |

$V_{S1}$    $V_{C1}$ / $0$

$V_{S2}$    $V_{C2}$ / $0$

$I_{D1}$    $I_1$ / $0$

$I_{D2}$    $I_1$ / $0$

$I_{C1}$    $(I_1 - I_O)$ / $-I_O$

$V_{C1}$    $\Delta V_C$

$V_{C2}$    $\Delta V_C$

$V_O$    $\Delta V_O$

$$\Delta V_O = \Delta V_C (1 - 2t_O)/(1 - t_O)$$

$V_L$    $(V_1 - V_C)$ / $(V_1 - V_O)$

$I_1$

FIG.4.

FIG. 5.

0060020

European Patent
Office

EUROPEAN SEARCH REPORT

Application number

EP 82 30 0539.2

| Category | Citation of document with indication, where appropriate, of relevant passages | Relevant to claim |
|---|---|---|
| A | AT - B - 349 103 (H.-H. KRIEGER)<br>* claim; fig. 1 *<br>-- | 1 |
| A | DE - B2 - 1 933 177 (SIEMENS AG)<br>* fig. 1 *<br>-- | |
| A | COMPUTER DESIGN, Vol. 17, No. 3<br>March 1978, Concord<br>R.J. APFEL et al. "Universal Switching Regulator diversifies Power Subsystem Applications"<br>pages 103 to 112<br>* page 105, second paragraph; fig. 1 *<br>---- | |

**DOCUMENTS CONSIDERED TO BE RELEVANT**

**CLASSIFICATION OF THE APPLICATION (Int. Cl. 3)**

H 02 M  3/155
H 02 P  13/32

**TECHNICAL FIELDS SEARCHED (Int.Cl. 3)**

H 02 M  1/00
H 02 M  3/00
H 02 P  13/32

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 25-05-1982 | FAORO |

EPO Form 1503.1  06.78